Europäisches Patentamt

European Patent Office

Office européen des brevets

(19)

(11) Numéro de publication : **0 297 966 B1**

(12) # FASCICULE DE BREVET EUROPEEN

(45) Date de publication du fascicule du brevet :
17.07.91 Bulletin 91/29

(51) Int. Cl.⁵ : **G01B 7/16**

(21) Numéro de dépôt : **88401629.6**

(22) Date de dépôt : **27.06.88**

(54) **Dispositif et méthode de mesure des déformations d'un échantillon.**

(30) Priorité : 30.06.87 FR 8709265

(43) Date de publication de la demande :
04.01.89 Bulletin 89/01

(45) Mention de la délivrance du brevet :
17.07.91 Bulletin 91/29

(84) Etats contractants désignés :
**DE FR GB IT NL**

(56) Documents cités :
**US-A- 4 240 206**
**US-A- 4 587 739**

(73) Titulaire : **INSTITUT FRANCAIS DU PETROLE**
**4, Avenue de Bois-Préau**
**F-92502 Rueil-Malmaison (FR)**

(72) Inventeur : **Lessi, Jacques**
**13bis, rue du Puits**
**F-78580 Maule (FR)**
Inventeur : **Perreau, Philippe**
**60, rue Pierre Brossolette**
**F-92500 Rueil Malmaison (FR)**
Inventeur : **Bary, Daniel**
**11, rue Félix Faure**
**F-92500 Rueil Malmaison (FR)**
Inventeur : **Grard, Guy**
**82, rue Pasteur**
**F-95100 Argenteuil (FR)**

Jouve, 18, rue Saint-Denis, 75001 PARIS

**Description**

La présente invention concerne un appareillage et une méthode de mesure dans plusieurs directions, des déformations de carottes prélevées dans des formations géologiques, les déformations résultant notamment du relâchement des contraintes qui s'exerçaient sur cette carotte avant son prélèvement.

Les instruments qui permettent de mesurer la déformation des roches comportent des inconvénients dans leur utilisation. En effet, ils posent des problèmes de précision au niveau de la mesure pour les faibles déformations. De plus, la plupart de ces instruments ne sont pas réutilisables, ce qui conduit à des coûts d'installation élevés.

Il est connu dans le brevet US-4.578.739 un dispositif capable de pallier aux inconvénients cités ci-dessus. Cependant, il mesure la déformation de l'échantillon selon une direction, et donc ne permet pas de connaître le plan de propagation des fractures.

La présente invention permet notamment la détermination des tenseurs des contraintes et/ou des déformations et en particulier de la direction de la contrainte horizontale minimale de compression. La connaissance de cette contrainte horizontale minimale de compression, appliquée à la production minière, pétrolière, ou gazière, notamment dans des formations a faible perméabilité, permet de définir le plan de propagation des fractures hydrauliques qui lui est perpendiculaire.

En réalisant par exemple la détermination de cette contrainte sur plusieurs carottes prélevées en différents lieux d'une formation géologique il est possible de déterminer l'emplacement optimal des forages en vue de l'amélioration de la production d'un champ en développement.

On entend par perméabilité, la propriété des espaces intérieurs d'une roche de communiquer entre eux, ce qui permet aux fluides qu'ils contiennent de se mouvoir à travers la roche en question.

Une manière connue de connaître l'état des contraintes et/ou des déformations et/ou plus particulièrement ce plan de propagation consiste à prélever une carotte de roche de la formation géologique concernée et à mesurer sur cette carotte les déformations résultant du relâchement quasi instantané des contraintes in situ.

Une fois que la carotte est extraite de la formation, celle-ci subit d'abord des déformations instantanées et importantes qui ne sont accessibles à la mesure que si cette dernière est effectuée au fond de puits juste au moment du carottage.

A ces déformations instantanées succèdent, pendant plusieurs dizaines d'heures, des déformations différées dont l'ordre de grandeur est plus faible que celui des déformations instantanées, et que l'on peut par exemple observer une fois la carotte remontée à la surface du sol, comme cela peut être le cas dans des forages pétroliers.

Une méthode, dite du relâchement, consiste à mesurer, dans plusieurs directions, les déformations différées d'une carotte, d'en déduire l'ensemble des déformations et leur évolution dans le temps, et par suite de connaître les contraintes auxquelles la formation considérée est assujettie.

Si, par facilité, on opère ces mesures sur des carottes cylindriques et que l'on considère l'axe de la carotte comme l'une des directions principales de déformation (hypothèse simplificatrice, justifiée lorsque les carottes sont prélevées dans des puits verticaux ou réalisées perpendiculairement à la stratification), il suffit de quatre directions indépendantes (une parallèle à l'axe de la carotte et trois dans un plan perpendiculaire à cet axe) pour déterminer avec un modèle rhéologique, tel ceux présentés par Blanton et Warpinsky, les déformations d'une carotte, leur évolution dans le temps et les contraintes de la formation étudiée.

Cependant, en raison notamment de la très faible valeur des déformations mesurées (quelques micromètres), ainsi que le plus souvent des conditions opératoires pour l'obtention de celles-ci (vibrations de chantier, du vent,... produisant des mouvements parasites) et aussi du dispositif permettant d'acquérir ces mesures, les mesures des déformations, comme les déductions faites à partir de celles-ci, sont erronées.

Aussi, pour remédier entre autre à cet inconvénient, la présente invention propose un dispositif de mesure des déformations d'un échantillon, ces déformations résultant notamment du relâchement des contraintes auxquelles l'échantillon était préalablement soumis, l'échantillon ayant un axe correspondant sensiblement à une direction principale de déformation.

Ce dispositif se caractérise notamment en ce qu'il comporte au moins cinq capteurs de déplacement ayant chacun une direction de mesure, les directions de mesure étant sensiblement perpendiculaires audit axe de l'échantillon.

Lorsqu'un axe et une direction ne sont pas compris dans un même plan, on les considérera comme perpendiculaires lorsque l'angle formé entre l'axe et la parallèle à la direction coupant l'axe est un angle droit.

Les directions de mesure perpendiculaires à l'axe de l'échantillon pourront être concourantes avec l'axe de l'échantillon.

Le dispositif pourra comporter six capteurs de déplacement ayant chacun une direction de mesure, les directions de mesure étant indépendantes les unes des autres et sensiblement perpendiculaires audit axe de l'échantillon, et lesdits six capteurs pourront être associés par couples, de manière que les directions des capteurs de chaque couple soient sensiblement comprises dans un même plan axial et diamétralement opposées entre elles par rapport à l'échantillon.

Le dispositif pourra comporter une table sur laquelle est disposé perpendiculairement l'échantillon et pourra en outre comporter au moins un capteur dont la direction de mesure est sensiblement parallèle à l'axe de l'échantillon.

Le dispositif pourra comporter des moyens de centrage adaptés à maintenir l'échantillon sensiblement fixe relativement aux capteurs.

L'échantillon pourra avoir une forme cylindrique de révolution, et l'axe de la forme cylindrique pourra correspondre sensiblement à la direction principale de déformation.

La présente invention concerne en outre une méthode de mesure de déformations et ces mouvements d'un échantillon à l'aide d'un dispositif, les déformations résultant des relâchements des contraintes auxquelles l'échantillon était préalablement soumis, lesdits mouvements étant ceux de l'échantillon relativement au dispositif de mesure, l'échantillon ayant un axe correspondant à une direction principale de déformation. Cette méthode est notamment caractérisée en ce qu'on mesure les déplacements de la surface de l'échantillon suivant au moins cinq directions sensiblement perpendiculaires audit axe, ces déplacements résultant notamment desdites déformations et des mouvements.

On pourra former au moins deux couples de deux directions sur les cinq directions, les deux directions de chaque couple étant sensiblement comprises dans un même plan axial et diamètralement opposées entre elles par rapport à l'échantillon.

On pourra mesurer les déplacements suivant six directions indépendantes sensiblement perpendiculaires audit axe et on pourra associer deux à deux les six directions de manière à former trois couples de directions, les deux directions de chaque couple étant sensiblement comprises dans un même plan axial et diamètralement opposées par rapport à l'échantillon.

Les trois couples de directions pourront définir avec l'axe de l'échantillon respectivement trois plans axiaux de mesures et ces trois plans axiaux de mesures pourront être disposés l'un relativement à l'autre avec un angle sensiblement égal à 120 degrés.

L'échantillon pourra avoir une forme cylindrique de révolution et l'axe de la forme cylindrique pourra correspondre sensiblement à ladite direction principale de déformation. Les directions pourront être sensiblement comprises dans un même plan.

On pourra placer l'échantillon sur une table, l'axe de l'échantillon étant perpendiculaire à la table, et on pourra mesurer les déplacements de l'échantillon suivant son axe, sur la face de l'échantillon opposée à celle placée sur ladite table.

Les déplacements étant mesurés par des capteurs, chacun desdits couples de direction étant sensiblement coaxial à un axe d'analyse, on pourra effectuer la somme algébrique des valeurs des déplacements mesurées selon chacun des couples de direction, de manière à en déduire la déformation de l'échantillon suivant chaque axe d'analyse.

On pourra produire un déplacement simultané des capteurs dont la direction est sensiblement perpendiculaire audit axe de l'échantillon de manière à ce que les capteurs atteignent quasi simultanément leur position de mesure.

Le dispositif et/ou la méthode pourront être utilisés pour la détermination des déformations d'un échantillon géologique, tel une carotte prélevée dans un forage du sol.

L'invention pourra être bien comprise et tous ses avantages apparaîtront clairement à la lecture de la description qui suit, dont un exemple de réalisation est illustré par les figures annexées parmi lesquelles:

– la figure 1 représente en coupe le dispositif selon une variante de l'invention qui comporte six capteurs.

– la figure 2 est une vue de dessus du dispositif selon l'invention illustré à la figure 1, et

– la figure 3 représente en coupe une variante du dispositif selon l'invention.

La référence 1 est relative à l'échantillon, tel une carotte géologique, dont les déformations dues au relâchement des contraintes doivent être mesurées. L'échantillon 1 est maintenu par des moyens 2 de centrage sur une table 3, de manière que cet échantillon ait le moins de mouvements possibles relativement aux supports 4 de capteur de déplacement ou aux capteurs de déplacement 7.

En effet, notamment dans les chantiers miniers, les conditions pour effectuer de telles mesures sont relativement sévères et bien que l'échantillon soit maintenu sensiblement fixe, il subsiste toujours la possibilité de micro-mouvements parasites de l'échantillon qu'il est nécessaire de réduire.

Le dispositif de mesure des déformations comporte en outre une cellule 10 extérieure aux capteurs et à l'échantillon 1. Cette cellule 10 permet d'assurer la mise en équilibre thermique de l'ensemble échantillon/montage.

Le capteur de déplacement 7 est fixé au support 4 qui peut se déplacer par rapport à la table 3 au moyen d'une vis d'approche 8 ou de réglage grossier et (au moyen) d'une vis micrométrique 6.

Dans le cas de l'exemple de réalisation objet de la présente description, l'échantillon est une carotte minière et possède une forme cylindrique de révolution. L'axe 11 de cette forme cylindrique correspond à une direction 11 de déformation principale connue dans l'art de la mécanique des solides.

L'axe 11 de l'échantillon 1 est placé perpendiculairement au plan de la table 3. Le dispositif comporte six capteurs de déplacement horizontaux 7, P, $P_1$, Q, $Q_1$, R, $R_1$ ayant une direction de mesure concourante avec l'axe 11, et perpendiculaire à l'axe 11 de l'échantillon 1. Le dispositif comporte en outre un capteur de déplacement vertical V monté sur une console 9 suivant un axe de mesure parallèle à cet axe 11.

Les six plus un capteurs de déplacement pourront être des capteurs à induction fonctionnant sous un courant de 5 KHz et pourront avoir une résolution de 0,01 micromètre.

Les six capteurs horizontaux sont associés par couple (P, $P_1$), (Q, $Q_1$), (R, $R_1$), de manière que les directions des capteurs soient sensiblement comprises dans un plan axial de l'échantillon et soient diamètralement opposées entre elles par rapport à l'échantillon. Les trois couples de directions ainsi formés définissent avec l'axe 11 de l'échantillon trois plans axiaux de mesure. Ces plans axiaux sont disposés l'un relativement à l'autre avec un angle sensiblement égal à 120 degrés. Les axes des six capteurs 7 horizontaux sont situés dans le même plan perpendiculaire à l'axe de l'échantillon.

En réalisant des couples de directions de mesure, il est très facile de détecter et d'évaluer les légers mouvements accidentels de l'échantillon 1 relativement à la table 3.

Par cette disposition des directions de mesures des capteurs horizontaux, ou axes de ces capteurs, chaque couple de direction est coaxial à un axe d'analyse suivant lequel les déformations de l'échantillon sont faciles à obtenir avec une bonne précision, à partir de la somme algébrique des valeurs de déplacements mesurées suivant chacun des couples de directions.

Ainsi, par la connaissance des déformations de l'échantillon suivant trois axes d'analyse, et par l'utilisation d'un modèle rhéologique, tel ceux présentés par Blanton et Warpinsky, il est possible de connaître le tenseur des déformations de l'échantillon, de suivre leur évolution dans le temps et par suite de déterminer le tenseur des contraintes initiales de l'échantillon, soit encore l'état des contraintes de la formation géologique d'où provient l'échantillon.

Bien que l'exemple de réalisation préféré et décrit comporte six capteurs 7 horizontaux, on pourra réduire a cinq le nombre de ces capteurs. En effet, sachant qu'il est nécessaire de posséder cinq mesures indépendantes pour résoudre le calcul des cinq inconnues (trois inconnues relatives aux déformations de l'échantillon, deux inconnues relatives aux déplacements de l'échantillon par rapport au système de capteurs, ces deux mesures permettent d'évaluer les légers mouvements accidentels de l'échantillon par rapport à la table), il est possible de n'utiliser que cinq capteurs ayant des directions de mesures indépendantes.

Par directions de mesure indépendantes entre elles on entend les mesures effectuées suivant ces directions qui permettent la résolution du calcul mentionné précédemment. Un ensemble de telles directions est notamment donné par des directions concourantes à l'axe de l'échantillon et qui ne sont pas sensiblement comprises dans un même demi-plan délimité par l'axe de l'échantillon et défini par cet axe et le point de contact du capteur avec l'échantillon.

Afin de résoudre plus facilement le calcul des inconnues de mouvement horizontal, on pourra former au moins deux couples de directions de mesure indépendantes, de manière à connaître facilement les déformations selon l'axe d'analyse parallèle à ces couples de directions et compris dans le plan de ces couples de directions.

L'échantillon pourra avoir une autre forme que la forme préférée cylindrique de révolution. Aussi l'axe de l'échantillon sera défini comme étant un axe principal de déformation.

De préférence les directions horizontales de mesures sont situées dans un même plan perpendiculaire à l'axe principal de déformation de l'échantillon, mais on peut très bien placer ces directions dans des plans différents perpendiculaires audit axe.

Il est connu d'effectuer les mesures des déformations résultant du relâchement des contraintes dans l'air. Pour cela on place, par exemple, le dispositif de mesure dans une étuve dont la température est régulée à 25C° ± 0,1°C. Dans ce cas le choix de la température de régulation, qui est située au-dessus de la température ambiante, est établi pour que les pertes thermiques du dispositif soient toujours positives pendant la durée des mesures ou au cours des saisons de l'année. Ce type de moyens de régulation de la température ne comporte pas nécessairement de source froide.

Cependant, par exemple, lorsque l'échantillon est une carotte géologique, la surface de l'échantillon comme sa masse n'est le plus souvent pas, au moment où il va être placé dans le dispositif, à la température du dispositif. Il en résulte alors un certain délai pour que l'échantillon atteigne la température du dispositif de mesure et au-delà de laquelle les mesures sont valides.

Pour pallier cet inconvénient, la cellule 10 est remplie d'une masse thermique destinée à réduire les variations de température de l'échantillon et/ou du montage, et/ou à limiter les variations de saturation en fluide d'un échantillon imprégné de fluide.

Lorsque, par exemple, la masse thermique est de l'air régulé a 25°C et que l'échantillon est a une température de 10 ou 15°C, il est indispensable d'attendre plusieurs heures, voire dizaines d'heures, avant de pouvoir valider les mesures.

Cependant, la connaissance de l'évolution dans le temps des déformations, notamment le plus tôt possible après le carottage, ou dés le début du relâchement des contraintes, permet d'améliorer la qualité des interprétations des mesures.

Aussi, en remplaçant la masse thermique d'air par une masse thermique de volume suffisant ayant notamment une capacité calorifique et/ou une conductibilité thermique notablement supérieure à celle de l'air dans les conditions normales de températures et de pression, il est possible de réduire la durée de mise en température de l'échantillon et d'améliorer de ce fait la qualité des mesures et leur interprétation.

Des essais, utilisant un dispositif placé dans une étuve et une masse thermique liquide constituée d'huile de vaseline, ont montré qu'il fallait attendre seulement 160 minutes, après immersion de l'échantillon, initialement à une température voisine de 10°C, pour que celui-ci soit à la température du bain formé par la masse thermique.

Cette durée est estimée par l'observation en continu de la température du bain qui montre avant l'équilibre un refroidissement (correspondant à une mise en température de l'échantillon) et seulement une fois l'équilibre atteint, un réchauffage du bain produit par la source uniquement chaude des moyens de régulation.

Une fois que l'échantillon est à la température du bain, c'est-a-dire une fois que sa température est uniforme, il est possible de réaliser des corrections de déformations thermiques par la connaissance du coefficient de dilatation thermique. La valeur de ce coefficient peut être obtenue en faisant varier la température de l'échantillon une fois relaxé et en mesurant les déformations alors uniquement produites par la température. Sinon, au cours des mesures des déformations du relâchement, les déformations dues à la dilatation masqueraient les seules déformations résultant du relâchement.

Cette masse thermique d'inertie thermique améliorée, qui peut être constituée d'eau, d'huile, de mercure, d'un gel, d'une poudre..., permet en outre de stabiliser la température du dispositif qui lui aussi, bien que réalisé en matériau à faible coefficient de dilatation tel qu'en INVAR (marque déposée d'un alliage contenant 64% de fer, 36% de nickel et ayant un coefficient de dilatation, de $0,5.10^{-6}$ °C$^{-1}$), est succeptible d'introduire des déformations thermiques parasites.

Outre pour ses qualités thermiques, la masse thermique utilisée peut être sélectionnée pour sa capacité à ne pas assécher, ni imprégner, l'échantillon mesuré. En effet, lorsque l'échantillon est solide, présente une certaine porosité, et est imprégné par un fluide, tel celui de la formation géologique d'où provient l'échantillon, les variations de concentration de fluide de l'échantillon, comme la pénétration par un autre fluide, produisent des modifications des contraintes internes, notamment au cours du relâchement. Les modifications des contraintes internes se traduisent par des modifications des déformations mesurées et donc par une altération des mesures de déformation.

Ainsi, en utilisant une masse thermique ni asséchante, ni imprégnante pour l'échantillon, les déformations relatives à ces effets s'annulent et aucune correction due à la variation concentration en fluide de l'échantillon n'est à effectuer.

Si la masse thermique risque d'assécher et/ou d'imprégner un échantillon préalablement imprégné de fluide, l'échantillon pourra comporter une pellicule externe d'imperméabilisation, adaptée à empêcher la modification de la concentration en fluide d'imprégnation et/ou l'introduction de la masse thermique dans l'échantillon.

Lorsque l'échantillon est une carotte géologique imprégnée d'eau et que la masse thermique comporte de l'eau, l'échantillon pourra comporter une pellicule adaptée à empêcher l'éventuelle migration d'un sel présent dans l'échantillon.

Une autre manière pour déterminer la validité des mesures de déformation d'un échantillon consiste à utiliser deux capteurs de température. Le premier de ces deux capteurs est situé à une première distance de l'échantillon inférieure à une deuxième distance de l'échantillon où se trouve le deuxième capteur de température.

Par exemple, le premier capteur peut être placé sur l'échantillon et le deuxième capteur à 1 ou 2 cm de l'échantillon dans la masse thermique. Par cette disposition des capteurs et au moyen des valeurs de températures relevées par ces capteurs, on peut alors déterminer par exemple avec des moyens de comparaison, un gradient thermique existant dans la masse thermique et par conséquent l'instant où l'équilibre thermique est atteint et où les mesures de déformations sont valides (a partir de cet instant la température de l'échantillon est connue).

Pendant les mesures des déformations, de légères variations de température de consigne de la cellule, qui introduisent des perturbations dans les mesures de déformations, peuvent être alors corrigées si l'on établit des relations entre déformations et température en effectuant un étalonnage de l'ensemble montage et échantillon. Cet étalonnage peut être obtenu, en imposant une variation de température en fin d'essai, lorsque les déformations résultant du relâchement des contraintes sont devenues négligeables.

Pour mieux évaluer la répartition des températures dans l'échantillon, on pourra éviter de produire des mouvements de la masse thermique.

On pourra commander en fonction de ce gradient thermique des moyens de régulation de la température de la masse thermique, tels une source froide et/ou une source chaude, cette régulation ayant ses effets notamment à proximité de l'échantillon.

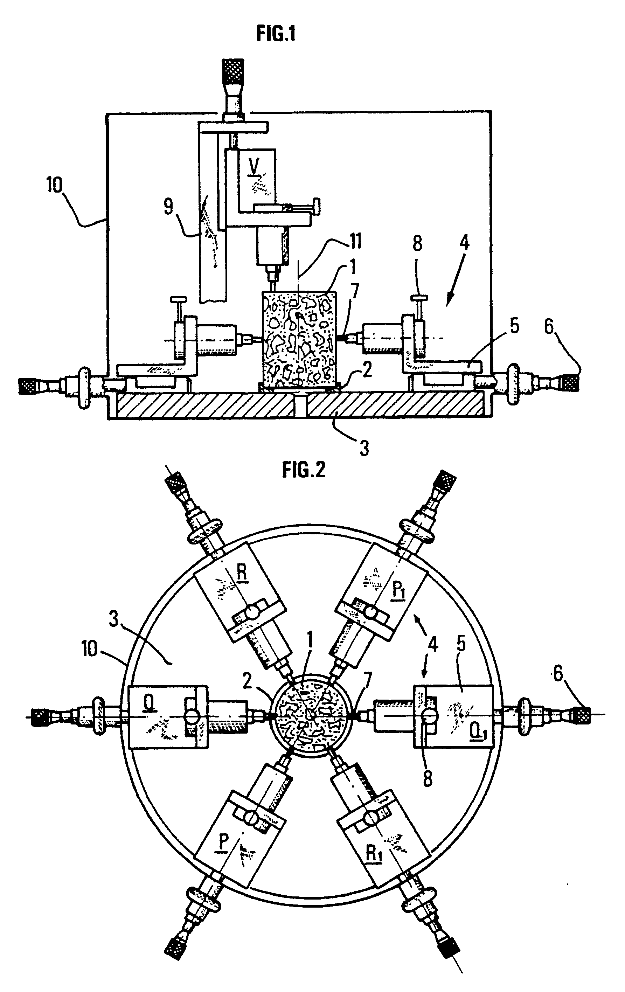

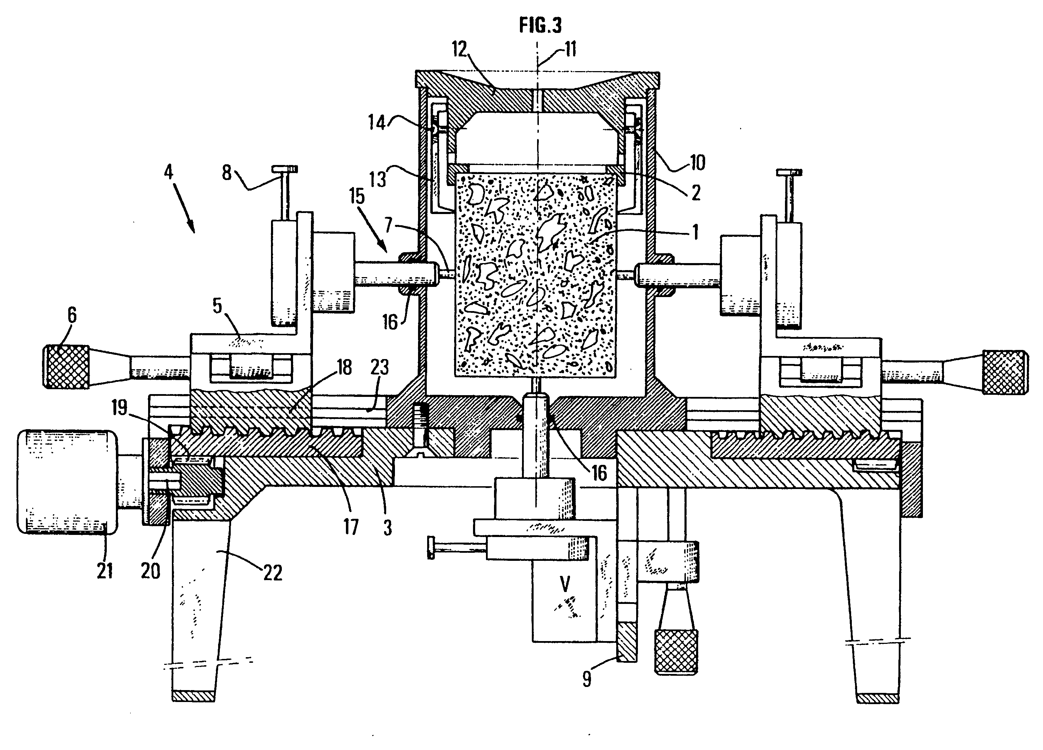

La figure 3 représente une variante du dispositif de mesure selon l'invention sur laquelle sont reportées les références numériques relatives aux mêmes éléments que ceux des figures 1 et 2.

Selon cette variante, les supports 4 des capteurs horizontaux de déplacement 7, les vis d'approche 8 et micrométrique 6 sont disposés à l'extérieur de la cellule 10. L'échantillon est centré dans la cellule 10 par des moyens 2 fixés à un couvercle 12 de la cellule. L'échantillon est maintenu au couvercle 12 par des griffes 13 serrées par des vis 14.

les capteurs horizontaux 7 pénètrent la paroi cylindrique de la cellule par des orifices circulaires 15 dont les bords sont pourvus de moyens d'étanchéité 16 coopérant avec la touche de six capteurs 7 pour empêcher le fluide se trouvant dans la cellule 10 de la quitter.

Les six supports 4 des capteurs horizontaux 7 sont montés dans des glissières 23 de la table 3 et synchronisés en translation par des moyens permettant une approche rapide et égale des capteurs de manière à ce qu'ils atteignent quasi simultanément leur position de mesure, et ainsi de réduire le temps de réglage de la position des capteurs une fois que l'échantillon 1 est placé dans la cellule 10, le diamètre des échantillons pouvant fortement varier de l'un à l'autre.

Ces moyens synchrones d'avancement en translation des capteurs 7 comportent par exemple une couronne 17, tournant autour de l'axe 11. Cette couronne 17 comporte sur sa face supérieure une spirale qui coopère avec une forme localement complémentaire 18 solidaire de chacun des supports 4 de capteur 7 pour obtenir une translation des supports, et sur sa face inférieure, une denture 19 périphérique qui coopère avec un pignon 20 mû par un moteur électrique 21 pour réaliser la rotation de la couronne dans un sens ou le sens opposé et ainsi l'avancement ou le recul des capteurs 7.

Contrairement au dispositif illustré aux figures 1 et 2, le capteur vertical de déplacement V, la console 9 et la vis d'approche associée sont disposés en dessous de la table 3 de manière que la touche du capteur vertical V appuie sur la face inférieure de l'échantillon sensiblement suivant l'axe de celui-ci.

Des moyens d'étanchéité 16 empêchent le fluide réalisant la masse thermique de s'échapper par l'espace annulaire séparant la table 3 du capteur vertical V.

Le dispositif comporte en outre des pieds 22 permettant de l'asseoir sur un espace de mesure.

Ce mode de réalisation est particulièrement bien adapté à l'utilisation de mercure comme masse thermique. La conductibilité thermique du mercure étant relativement très élevée, par exemple par rapport à celle de l'eau ou de l'huile, la durée nécessaire à la mise en température de l'échantillon est par suite diminuée. Des moyens de chauffage adaptés permettent d'obtenir un rapide équilibre des températures de l'échantillon. Le mercure offre aussi l'avantage de ne pas assécher, ni imprégner bon nombre d'échantillon de roche et ainsi n'oblige pas une imperméabilisation de ceux-ci, ce qui permet une mesure quasiment non différée.

De plus, l'agencement des capteurs et de la cellule permet un placement rapide de l'échantillon et des capteurs et ainsi une obtention rapide des mesures. En outre, le fluide réalisant la masse thermique peut rester dans la cellule entre la mesure de plusieurs échantillons consécutifs ce qui évite des manipulations et accroit la sécurité de la mise en place notamment avec des fluides tels que le mercure qui nécessite des précautions particulières.

## Revendications

1. Dispositif de mesure des déformations d'un échantillon (1), lesdites déformations résultant notamment du relâchement des contraintes auxquelles l'échantillon était soumis préalablement à la mesure, l'échantillon ayant un axe (11) correspondant à une direction principale de déformation, caractérisé en ce qu'il comporte au moins cinq capteurs (P, P1, Q, Q1, R, R1) de déplacement ayant chacun une direction de mesure, les directions de mesure étant sensiblement perpendiculaires audit axe (11) de l'échantillon.

2. Dispositif selon la revendication 1, caractérisé en ce que lesdites directions de mesure perpendiculaires à l'axe de l'échantillon sont concourantes avec l'axe de l'échantillon.

3. Dispositif selon l'une des revendications 1 et 2, caractérisé en ce qu'il comporte six capteurs (P, $P_1$, Q, $Q_1$, R, $R_1$) de déplacement ayant chacun une direction de mesure, les directions de mesure étant indépendantes les unes des autres et sensiblement perpendiculaires audit axe de l'échantillon, et en ce que lesdits six capteurs sont associés par couples, de manière que les directions des capteurs de chaque couple soient sensiblement comprises dans un même plan axial et diamétralement opposées entre elles par rapport à l'échantillon.

4. Dispositif selon l'une des revendications 1 ou 2, caractérisé en ce qu'il comporte une table (3) sur laquelle est disposé perpendiculairement l'échantillon (1) et en ce qu'il comporte au moins un capteur (V) dont la direction de mesure est sensiblement parallèle à l'axe (11) de l'échantillon.

5. Dispositif selon l'une des revendications 1 à 4, caractérisé en ce qu'il comporte des moyens de centrage (2) adaptés à maintenir l'échantillon sensiblement fixe relativement aux capteurs de déplacement.

6. Dispositif selon l'une des revendications 1 à 5, caractérisé en ce que ledit échantillon a une forme cylindrique de révolution, et en ce que l'axe (11) de la forme cylindrique correspond sensiblement à ladite direction principale de déformation.

7. Dispositif selon la revendication 4, caractérisé en ce que ledit capteur (V) dont la direction de mesure est sensiblement parallèle à l'axe (11) de l'échantillon, est disposé en dessous de ladite table (3).

8. Méthode de mesure de déformations et des mouvements d'un échantillon (1) à l'aide d'un dispositif, lesdites déformations résultant du relâchement des contraintes auxquelles l'échantillon était soumis préalablement à la mesure, lesdits mouvements étant ceux de l'échantillon relativement au dispositif de mesure, l'échantillon (1) ayant un axe (11) correspondant à une direction principale de déformation, caractérisée en ce qu'on mesure les déplacements de la surface de l'échantillon suivant au moins cinq directions sensiblement perpendiculaires audit axe, lesdits déplacements résultant notamment desdites déformations et desdits mouvements.

9. Méthode selon la revendication 8, caractérisée en ce qu'on forme au moins deux couples de deux directions sur les cinq directions, les deux directions de chaque couple étant sensiblement comprises dans un même plan axial et diamétralement opposées entre elles par rapport à l'échantillon.

10. Méthode selon l'une des revendications 8 et 9, caractérisée en ce qu'on mesure les déplacements suivant six directions indépendantes sensiblement perpendiculaires audit axe et en ce qu'on associe deux à deux lesdites six directions de manière à former trois couples de directions, les deux directions de chaque couple étant sensiblement comprises dans un même plan axial et diamétralement opposées par rapport à l'échantillon.

11. Méthode selon la revendication 10, caractérisée en ce que les trois couples de direction définissent avec l'axe de l'échantillon respectivement trois plans axiaux de mesure et en ce que les trois plans de mesure sont séparés l'un de l'autre d'un angle sensiblement égal à 120 degrés.

12. Méthode selon l'une des revendications 8 à 11, caractérisée en ce que ledit échantillon a une forme cylindrique de révolution et en ce que l'axe de la forme cylindrique correspond sensiblement à ladite direction principale de déformation.

13. Méthode selon l'une des revendications 8 à 12, caractérisée en ce qu'on place l'échantillon sur une table, l'axe de l'échantillon étant perpendiculaire à la table, et en ce qu'on mesure les déplacements de l'échantillon suivant son axe sur la face de l'échantillon opposée à celle placée sur ladite table.

14. Méthode selon l'une des revendications 8 à 13, caractérisée en ce que l'on effectue la somme algébrique des valeurs de déplacements mesurés selon chacun des couples de direction coaxial à un axe d'analyse, de manière à en déduire la déformation de l'échantillon suivant chaque axe d'analyse.

15. Méthode selon l'une des revendications 8 à 13, caractérisée en ce que l'on produit un déplacement simultané des capteurs dont la direction est sensiblement perpendiculaire audit axe de l'échantillon de manière à ce que lesdits capteurs atteignent quasi simultanément leur position de mesure.

16. Application du dispositif selon l'une des revendications 1 à 8 ou de la méthode selon l'une des revendications 9 à 15 à la détermination des déformations d'un échantillon géologique, tel une carotte prélevée dans un forage du sol.

**Patentansprüche**

1. Gerät zum Messen der Deformationen einer Probe (1), wobei diese Deformationen insbesondere aus der Aufhebung der Beanspruchungen, denen diese Probe vor der Messung ausgesetzt ist, resultieren, wobei die Probe eine Achse (11) entsprechend einer Hauptdeformationsrichtung aufweist, dadurch gekennzeichnet, daß es wenigstens fünf Verschiebungs- bzw. Bewegungsaufnehmer (P, P1, Q, Q1, R, R1) umfaßt, die je über eine Messrichtung verfügen, wobei die Messrichtungen im wesentlichen senkrecht zur Achse (11) der Probe sind.

2. Gerät nach Anspruch 1, dadurch gekennzeichnet, daß diese Messrichtungen senkrecht zur Achse der Probe durch die Achse der Probe gehen bzw. zusammenlaufen.

3. Gerät nach einem der Ansprüche 1 und 2, dadurch gekennzeichnet, daß es sechs Verschiebungsaufnehmer (P, P1, Q, Q1, R, R1), je mit einer Messrichtung, umfaßt, wobei die Messrichtungen unabhängig voneinander und im wesentlichen senkrecht zu dieser Achse der Probe sind und daß diese sechs Aufnehmer paarweise einander zugeordnet sind, derart, daß die Richtungen der Aufnehmer jedes Paares im wesentlichen in ein und dergleichen Axialebene und diametral einander gegenüber, bezogen auf die Probe, sind.

4. Gerät nach einem der Ansprüche 1 oder 2, dadurch gekennzeichnet, daß es einen Tisch (3) aufweist, auf welchem senkrecht die Probe (1) angeordnet ist und daß es wenigstens einen Aufnehmer (V) aufweist, dessen Messrichtung im wesentlichen parallel zur Achse (11) der Probe ist.

5. Gerät nach einem der Ansprüche 1 bis 4, dadurch gekennzeichnet, daß es Zentriermittel (2) umfaßt, die so eingerichtet sind, daß sie die Probe im wesentlichen fest relativ zu den Verschiebungsaufnehmern halten.

6. Gerät nach einem der Ansprüche 1 bis 5, dadurch gekennzeichnet, daß diese Probe eine zylindrische Umdrehungsgestalt hat und daß die Achse (11) der zylindrischen Form im wesentlichen dieser Hauptdeformationsrichtung entspricht.

7. Gerät nach Anspruch 4, dadurch gekennzeichnet, daß dieser Aufnehmer (V), dessen Messrichtung im wesentlichen parallel zur Achse (11) der Probe ist, unterhalb dieses Tisches (3) angeordnet ist.

8. Verfahren zum Messen von Deformationen und Bewegungen einer Probe (1) mit Hilfe eines Gerätes, wobei diese Deformationen aus dem Aufheben der Beanspruchungen resultieren, denen die Probe vor der Messung ausgesetzt war, wobei diese Bewegungen die der Probe relativ zum Messgerät sind und die Probe (1) eine Achse (11) entsprechend der Hauptdeformationsrichtung hat, dadurch gekennzeichnet, daß man die Verschiebungen der Oberfläche der Probe entsprechend wenigstens fünf Richtungen im wesentlichen senkrecht zu dieser Achse mißt, wobei die Verschiebungen insbesondere aus diesen Deformationen und diesen Bewegungen resultieren.

9. Verfahren nach Anspruch 8, dadurch gekennzeichnet, daß man wenigstens zwei Paare aus zwei Richtungen für die fünf Richtungen bildet, wobei die zwei Richtungen jedes Paares im wesentlichen in ein und dergleichen Axialebene und diametral einander gegenüber, bezogen auf die Probe, sind.

10. Verfahren nach einem der Ansprüche 8 und 9, dadurch gekennzeichnet, daß man die Verschiebungen längs sechs voneinander unabhängigen Richtungen im wesentlichen senkrecht zu dieser Achse mißt und daß man zu je zwei diese sechs Richtungen derart zuordnet, daß drei Paare von Richtungen gebildet werden, wobei die beiden Richtungen jedes Paares im wesentlichen in ein und dergleichen Axialebene und, bezogen auf die Probe, einander diametral gegenüber sind.

11. Verfahren nach Anspruch 10, dadurch gekennzeichnet, dass die drei Paare von Richtungen mit der Achse der Probe jeweils drei Axialmessebenen und dass die drei Messebenen voneinander um einen Winkel von im wesentlichen 120° getrennt sind.

12. Verfahren nach einem der Ansprüche 8 bis 11, dadurch gekennzeichnet, dass diese Probe die Form eines Umdrehungszylinders hat und dass die Achse der zylindrichen Form im wesentlichen dieser Hauptverformungsrichtung entspricht.

13. Verfahren nach einem der Ansprüche 8 bis 12, dadurch gekennzeichnet, dass man die Probe auf einem Tisch anordnet, wobei die Achse der Probe senkrecht zum Tisch sich befindet und dass man die Bewegungen der Probe längs ihrer Achse auf der Fläche der Probe misst, die der auf dem Tisch angeordneten gegenüberliegt.

14. Verfahren nach einem der Ansprüche 8 bis 13, dadurch gekennzeichnet, dass man die algebraische Summe der Werte der Bewegungen bzw. Verschiebungen, gemessen entsprechend jedem der Richtungspaare, koaxial zu einer Analysenachse bildet, um hieraus die Deformation der Probe längs jeder Analysenachse abzuleiten.

15. Verfahren nach einem der Ansprüche 8 bis 13, dadurch gekennzeichnet, dass man eine gleichzeitige Bewegung oder Verschiebung der Aufnehmer erzeugt, deren Richtung im wesentlichen senkrecht zu dieser Achse der Probe derart ist, dass diese Aufnehmer fast gleichzeitig ihre Messposition erreichen.

16. Anwendung der Vorrichtung nach einem der Ansprüche 1 bis 8 oder des Verfahren nach einem der Ansprüche 9 bis 15 auf die Bestimmung der Verformungen einer geologischen Probe, beispielsweise einem in einer Erdbodenbohrung entnommenen Bohrkern.

**Claims**

1. Device for measuring the deformations of a sample (1), the said deformations resulting, in particular, from the relaxation of the stresses to which the sample was subjected prior to being measured, the sample having an axis (11) corresponding to a principal direction of deformation, characterised in that it comprises at least five sensors (P, P1, Q, Q1, R, R1) for detecting the displacement, each sensor having a particular direction of measurement, these directions of measurement being basically perpendicular to the said axis (11) of the sample.

2. Device in accordance with claim 1, characterised in that the said directions of measurement perpendicular to the axis of the sample are convergent with the axis of the sample.

3. Device in accordance with one of claims 1 and 2, characterised in that it comprises six sensors (P, P1, Q, Q1, R, R1), each having a particular direction of measurement, these directions of measurement being independent of each other and basically perpendicular to the said axis of the sample and in that the said six sensors are associated in pairs so that the directions of the sensors comprising each pair are basically within the same axial plane and diametrically opposite each other relative to the sample.

4. Device in accordance with one of claims 1 or 2, characterised in that it comprises a table (3) on which the sample (1) is positioned perpendicular and square and in that it comprises at least one sensor (V) where the direction of measurement is basically parallel to the axis (11) of the sample.

5. Device in accordance with one of claims 1 to 4, characterised in that it comprises a means of centring (2) designed to maintain the sample in a basically fixed position relative to the sensors measuring the displacement.

6. Device in accordance with one of claims 1 to 5, characterised in that the said sample has the form a cylinder of revolution and in that the axis (11) of the cylindrical form corresponds basically to the said principal direction of deformation.

7. Device in accordance with claim 4, characterised in that the said sensor (V) for which the direction of measurement is basically parallel to the axis (11) of the sample is positioned below the said table (3).

8. Method of measuring the deformations and movements of a sample (1) by means of a device, the said deformations resulting in relaxation of the stresses to which the sample was subjected prior to being measured, the said movements being those of the sample relative to the measurement device, the sample (1) having an axis (11) corresponding to a principal direction of deformation, characterised in that the displacements of the surface of the sample are measured along at least five directions basically perpendicular to the said axis, the said displacements being the result of, in particular, the said deformations and the said movements.

9. Method in accordance with claim 8, characterised in that at least two pairs are formed in two directions over the five directions, the two directions of each pair being basically included in the same axial plane and diametrically opposite to each other relative to the sample.

10. Method in accordance with one of claims 8 and 9, characterised in that the displacements are measured along six independent directions which are basically perpendicular to the said axis in that the said six directions are associated in pairs in order to form three directional pairs, the two directions for each pair being basically included in the same axial plane and diametrically opposite relative to the sample.

11. Method in accordance with claim 10, characterized in that the three directional paire define, with the axis of the sample, respectively, three axial planes of measurement and in that the three planes of measurement are separated from each other by an angle which is basically equal to 120 degrees.

12. Method in accordance with one of claims 8 to 11, characterized in that the said sample has the form of a cylinder of revolution and in that the axis of the cylindrical form corresponds basically to the said principal direction of deformation.

13. Method in accordance with one of claims 8 to 12, characterized in that the sample is positioned on a table, the axis of the sample being perpendicular to the table, and in that the displacements of the sample are measured along its axis, on the face of the sample opposite to that positioned on the said table.

14. Method in accordance with one of claims 8 to 13, characterized in that the algebraic sum of the values of the displacements measured along each of the directional pairs co-axial to an axis of analysis is measured in order to determine from this deformation of the sample along each axis of analysis.

15. Method in accordance with one of claims 8 to 13, characterized in that a simultaneous displacement of the sensors is carried out, the direction being basically perpendicular to the said axis of the sample, in order that the said sensors virtually reach their position of measurement simultaneously.

16. Application of the device in accordance with one of claims 1 to 8, or the method in accordance with one of claims 9 to 15, to a determination of the deformations of a geological sample, such as a core sample from a drilled hole.

**FIG.1**

**FIG.2**

# FIG.3

EP 0 297 966 B1